# EUROPEAN PATENT APPLICATION

(11) **EP 4 438 929 A1**
(43) Date of publication of application: **02.10.2024**
(21) Application number: 23210658.3
(22) Date of filing: 17.11.2023
(51) Int. Cl.: F16K 5/04, F16K 11/085

(54) **VALVE STRUCTURE**

(30) Priority: 30.03.2023 JP 2023054755
(71) Applicant: Yjs Co., Ltd., Osaka-shi, Osaka 532-0021 (JP)
(72) Inventor: Yonezawa, Ikuhiro, Osaka-shi, Osaka, 5320021 (JP); Kameyama, Shuji, Osaka-shi, Osaka, 5320021 (JP)
(74) Representative: Grünecker Patent- und Rechtsanwälte PartG mbB

(57) **Abstract**

A valve structure is provided which can prevent a fluid from leaking out of a discharge path in a blocked state of a valve element.

The valve structure includes a main body 2 formed with a first flow path 7, and a second flow path 8 connected to the first flow path 7; a valve element 3 inserted in the main body 2, and configured such that when the valve element 3 rotates about the center axis or axially moves, one of a fluid-flowing state and a blocked state between the first flow path 7 and the second flow path 8 is switchable to the other state, the valve element 3 having a communication path 14 via which the first flow path 7 and the second flow path 8 communicate with each other in the fluid-flowing state; and an annular seal member 5 disposed between the main body 2 and the valve element 3. In the blocked state, the first flow path 7 is located on one side of the imaginary surface defined by the seal member 5 with the second flow path 8 located on the other side of the above surface, and an opening of the communication path 14, which can communicate with the first flow path 7 and the second flow path 8, is located only on the one side or the other side of the above surface. The first flow path 7 and the second flow path 8 are liquid-tightly separated from each other.

## Description

### TECHNICAL FIELD

The present invention relates to a valve structure used in, e.g., a discharge portion of a hot water heating system.

### BACKGROUND ART

For example, in a heating system that uses hot water as a heating medium, it is necessary to regularly discharge, to the outside of its heating circuit, foreign matter such as iron dust or rust that is peeled off from iron pipes constituting the heating circuit, mixed into hot water, and captured by a foreign matter removing device installed in the heating circuit. In order to discharge such foreign matter, for example, a drain cock structure as disclosed in the below-identified patent document 1 or 2 can be used. In this structure, by screwing a drain cock into the distal end of a drain pipe disposed at the lower end of a tank, the drain pipe is closed, and by loosening the drain cock, foreign matter together with water is discharged from a drain discharge path formed in the drain pipe.

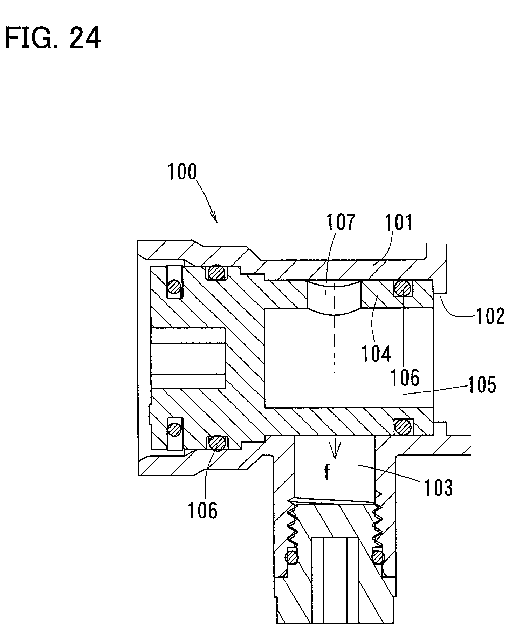

For the structure of Patent Document 1, 2, the screw-type drain cock needs to be rotated multiple times to axially move the drain cock until the discharge path is opened. This tends to consume time. Therefore, instead of the screw-type drain cock, it is considered to use, as in, e.g., the valve structure 100 of Fig. 24, a valve element 104 that can be rotated about the center axis by 180 degrees to switch one of a fluid-flowing state and a blocked state between an inflow path 102 and a discharge path 103 of a main body 101 to the other state, thereby facilitating the work of discharging foreign matter. The valve element 104 has, in its interior, a communication path 105 via which the inflow path 102 and the discharge path 103 communicate with each other in the fluid-flowing state. Annular seal members 106 are disposed on the outer peripheries of the respective axial ends of the valve element 104 so as to be located between the inner periphery of the main body 101 and the outer periphery of the valve element 104.

### PRIOR ART DOCUMENTS

### PATENT DOCUMENTS

Patent document 1: Japanese Unexamined Patent Application Publication No. 2016-223644
Patent document 2: Japanese Unexamined Patent Application Publication No. 2003-83696

### SUMMARY OF THE INVENTION

### PROBLEMS TO BE SOLVED BY THE INVENTION

For the structure shown in Fig. 24, in the blocked state of the valve structure 100, a fluid may leak out from a communication path through-hole 107 of the communication path 105 through the gap between the inner periphery of the main body 101 and the outer periphery of the valve element 104 (see the arrow f in Fig. 24). Therefore, it is an object of the present invention to provide a valve structure in which a fluid does not leak out of the discharge path in the blocked state of the valve element.

### MEANS FOR SOLVING THE PROBLEMS

In order to achieve the above object, the present invention provides a valve structure comprising: a main body including a first flow path, and a second flow path connected to the first flow path; a valve element inserted in the main body, and configured such that when the valve element rotates about a center axis of the valve element or axially moves, one of a fluid-flowing state and a blocked state between the first flow path and the second flow path is switchable to the other of the fluid-flowing state and the blocked state, the valve element having a communication path via which the first flow path and the second flow path communicate with each other in the fluid-flowing state; and an annular seal member disposed between the main body and the valve element, wherein in the blocked state, the first flow path is located on one side of an imaginary surface defined by the seal member with the second flow path located on the other side of the imaginary surface, and an opening of the communication path, which can communicate with the first flow path and the second flow path, is located only on either the one side or the other side of the imaginary surface, and wherein the first flow path and the second flow path are liquid-tightly separated from each other.

With this arrangement, since, in the blocked state, the fluid in the communication path cannot flow from the one side of the surface defined by the seal member to the other side thereof, i.e., from the side of the inflow path to the discharge path, leakage of the fluid in the blocked state is prevented.

The above valve structure may be a structure further comprising a guide member having: a guide member through-hole configured to correspond to a position of the first flow path or the second flow path in the fluid-flowing state; and an inclined end formed at one axial end so as to be inclined relative to center axes of the first flow path and the second flow path, wherein the guide member is disposed between the main body and the valve element so as to be non-rotatable about a center axis of the guide member relative to the main body, and so as to guide the valve element, wherein the main body has a step on an inner surface of the main body, and wherein the seal member is axially disposed along the inclined end so as to be located in a groove formed between the inclined end and the step.

With this arrangement, since when the valve element rotates about the center axis, the seal member does not rotate, it is possible to prevent the burden on the seal member caused by the seal member crossing the second flow path, and thus extend the life of the seal member.

The valve structure further comprising the guide member may be a structure wherein the communication path has: a bottomed recess which has a closed bottom, and which is open in a direction in which the valve element is inserted into the main body; and a communication path through-hole configured to open from the bottomed recess so as to correspond to a position of the guide member through-hole in the fluid-flowing state, and wherein the communication path through-hole is included within a formation range of the guide member through-hole.

With this arrangement, even if the centers of the communication path through-hole and the guide member through-hole are somewhat displaced from each other in the fluid-flowing state of the valve element, the fluid flows smoothly toward the discharge path. Therefore, it is possible to avoid the trouble caused by adhesion of foreign matter (such as iron dust or rust) in the fluid to the inner edge of the guide member through-hole.

The valve structure further comprising the guide member may be a structure wherein a through hole is formed in the second flow path so as to be included within a formation range of the guide member through-hole in a rotational direction of the valve element, and wherein the inner surface of the main body is exposed to an inner edge of the guide member through-hole in the rotational direction.

With this arrangement, the fluid jetted at a high speed when the valve opening degree is relatively small once collides with the inner surface of the main body, and its momentum is weakened. Therefore, it is possible to reduce scattering of the fluid discharged from the second flow path, to the vicinity of the second flow path.

In all of the above arrangements, the main body may further include a third flow path connected to the first flow path, and the valve structure may further comprise an auxiliary seal member disposed between the main body and the valve element so as to liquid-tightly separate the first flow path and the third flow path from each other.

This constitutes a three-way valve having high liquid tightness between the flow paths.

The valve structure including the third flow path may be a structure wherein the valve element is constituted by a first valve element and a second valve element that are axially non-rotatable relative to each other, wherein each of the first valve element and the second valve element has the communication path, wherein the first flow path comprises a first inflow path portion connected to the first valve element, and a second inflow path portion connected to the second valve element, wherein in a first fluid-flowing state, the first inflow path portion is in communication with the third flow path, and the second inflow path portion is in communication with the second flow path, and wherein in a second fluid-flowing state created by rotating the valve element about the center axis of the valve element by a predetermined angle, the first inflow path portion is in communication with the second flow path, and the second inflow path portion is in communication with the third flow path.

This constitutes a four-way valve having high liquid tightness between the flow paths.

Instead of the arrangement in which the guide member is provided, the following arrangement may be used: the valve element has, in an outer periphery of the valve element, an inclined peripheral groove inclined relative to center axes of the first flow path and the second flow path, and the seal member is disposed in the inclined peripheral groove.

With this arrangement, it is possible to easily attach a seal member by which the first and second flow paths are liquid-tightly separated from each other.

### EFFECTS OF THE INVENTION

The above valve structure of the present invention prevents a fluid from leaking out of the discharge path in the blocked states of the valve structure.

### BRIEF DESCRIPTION OF THE DRAWINGS

Fig. 1 is a sectional view of a valve structure (fluid-flowing state) according to a first embodiment of the present invention.
Fig.2 is a partial sectional view of a portion of the valve structure illustrated in Fig. 1.
Fig. 3 is an exploded perspective view of the valve structure illustrated in Fig. 1.
Fig. 4 is a sectional view of a portion of the valve structure illustrated in Fig. 1 that is in its blocked state.
Fig. 5 is an enlarged sectional view of a discharge path of the valve structure illustrated in Fig. 1.
Fig. 6 is a perspective view of a cut portion of the valve structure illustrated in Fig. 1.
Fig. 7A is a bottom view illustrating a first variation of a valve element of the valve structure illustrated in Fig. 1, and Fig. 7B is a sectional view illustrating this first variation.
Fig. 8A illustrates a fluid-flowing state of a second variation of the valve element of the valve structure illustrated in Fig. 1, and Fig. 8B illustrates a blocked state of this second variation.
Fig. 9A illustrates a fluid-flowing state of a third variation of the valve element of the valve structure illustrated in Fig. 1, and Fig. 9B illustrates a blocked state of this third variation.
Fig. 10A is a bottom view illustrating a variation of a guide member of the valve structure illustrated in Fig. 1 in which a guide member through-hole comprising an elongated hole is formed.
Fig. 10B is a perspective view illustrating a variation of the guide member of Fig. 1 in which a through hole circumferentially adjacent to a guide member through-hole is formed.
Fig. 10C is a perspective view illustrating a variation of the guide member of Fig. 1 in which a guide member through-hole comprising an elongated hole is formed, and a gap is defined at the portion of an inclined end circumferentially adjacent to the guide member through-hole.
Fig. 11A is a perspective view illustrating a variation of the guide member of the valve structure illustrated in Fig. 1 in which a guide member through-hole is formed as a single through hole by coupling together the entire of the guide member through-hole and the through hole illustrated in Fig. 10B.
Fig. 11B is a sectional view illustrating a variation of the guide member of Fig. 1 in which a guide member through-hole tapered to radially expand toward the radially inner side is formed.
Fig. 11C is a sectional view illustrating a variation of the guide member of Fig. 1 in which a guide member through-hole tapered to radially expand toward the radially outer side is formed.
Fig. 12A is a front view illustrating a variation of a discharge plug of the valve structure illustrated in Fig. 1, and Fig. 12B is a perspective view illustrating this variation.
Fig. 13 is an exploded perspective view of a valve structure according to a second embodiment of the present invention (deformed O-ring).
Fig. 14A is a sectional view of a valve structure according to a third embodiment of the present invention that is in its fluid-flowing state. Fig. 14B is a sectional view of the valve structure of the third embodiment that is in its blocked state.
Fig. 15A is a sectional view of a valve structure according to a fourth embodiment of the present invention in which a first discharge path is in its blocked state.
Fig. 15B is a sectional view of the valve structure of the fourth embodiment in which a second discharge path is in its blocked state.
Fig. 16A is a sectional view of a valve structure according to a fifth embodiment of the present invention in which a first discharge path is kept in its blocked state by a first valve element, and a second discharge path is kept in its blocked state by a second valve element.
Fig. 16B is a sectional view of the valve structure of the fifth embodiment in which the second discharge path is kept in its blocked state by the first valve element, and the first discharge path is kept in its blocked state by the second valve element.
Fig. 17 is a sectional view taken along line XVII-XVII in Fig. 16A.
Fig. 18A is a sectional view illustrating a variation of the valve structure illustrated in Fig. 16A, 16B in which a first discharge path is kept in its blocked state by a first valve element, and a second discharge path is kept in its blocked state by a second valve element.
Fig. 18B is a sectional view illustrating this variation in which the second discharge path is kept in its blocked state by the first valve element, and the first discharge path is kept in its blocked state by the second valve element.
Fig. 19A is a sectional view of a valve structure according to a sixth embodiment of the present invention that is in its fluid-flowing state.
Fig. 19B is a sectional view of the valve structure of the sixth embodiment that is in its blocked state.
Fig. 20A illustrate a fluid-flowing state of a first variation of the valve structure illustrated in Fig. 19A, 19B.
Fig. 20B illustrates a blocked state of this first variation.
Fig. 21A illustrates a fluid-flowing state of a second variation of the valve structure illustrated in Fig. 19A, 19B.
Fig. 21B illustrates a blocked state of this second variation.
Fig. 22A is a sectional view illustrating a fluid-flowing state of a first application example in which the valve structure illustrated in Fig. 1 is applied.
Fig. 22B is a sectional view illustrating a blocked state of this first application example.
Fig. 23A is a sectional view illustrating a fluid-flowing state of a second application example in which the valve structure illustrated in Fig. 1 is applied.
Fig. 23B is a sectional view illustrating a blocked state of this second application example.
Fig. 24 is a sectional view of a portion of a general valve structure.

### BEST MODE FOR CARRYING OUT THE INVENTION

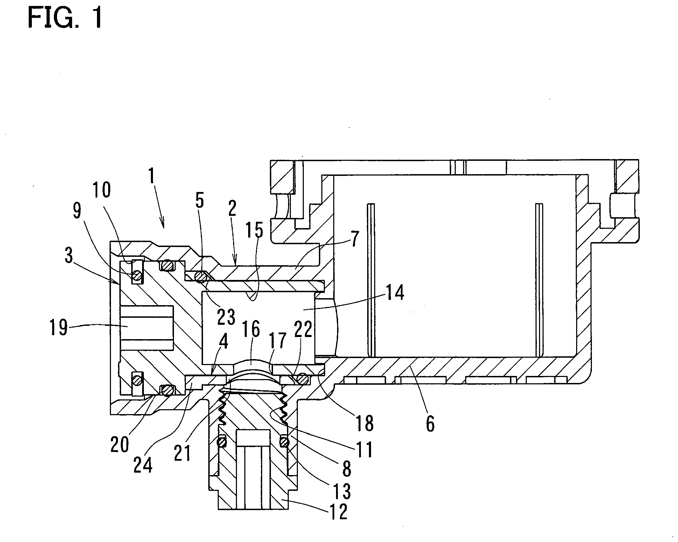

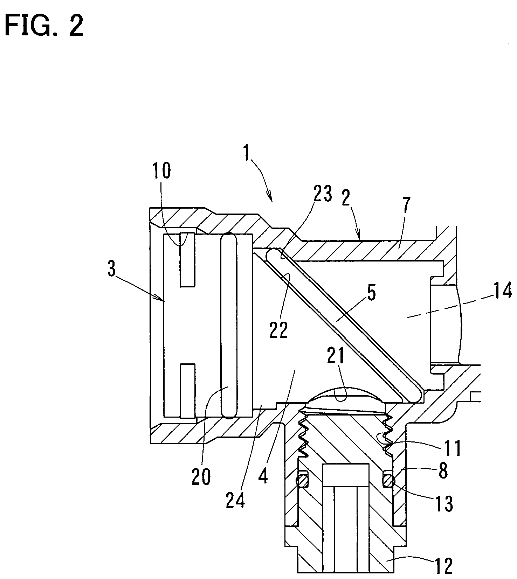

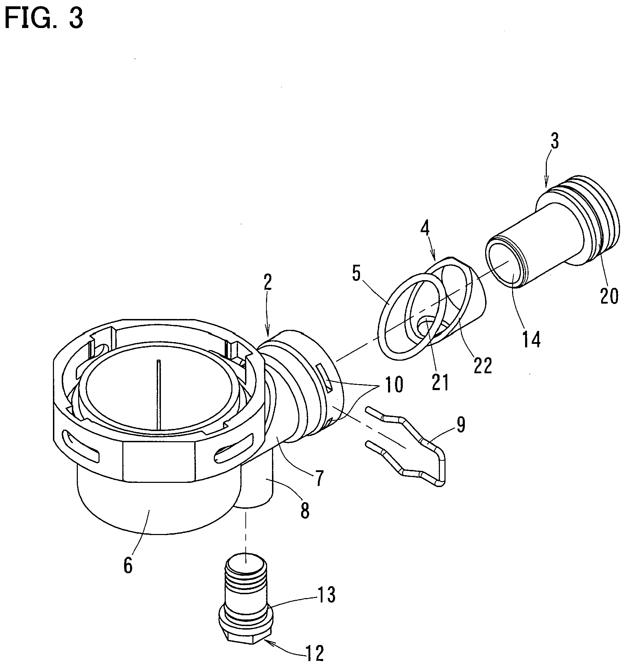

A valve structure 1 according to the first embodiment of the present invention is now described with reference to some of the drawings. The valve structure 1 is used, for example, in a foreign matter removing device installed in a heating circuit of a heating system that uses hot water as a heating medium. The valve structure 1 has the function of discharging, to the outside of the heating circuit, foreign matter such as iron dust and rust captured by this foreign matter removing device. As illustrated in Figs. 1 to 5, the valve structure 1 includes a main body 2, a valve element 3, a guide member 4, and a seal member 5 as its main elements.

The main body 2 is connected to a foreign matter capturing portion 6 of the foreign matter removing device, and includes an inflow path as a first flow path 7 into which a fluid (generally water) containing foreign matter flows (the same reference number as used with respect to the first flow path is hereinafter used with respect to the inflow path); and a discharge path as a second flow path 8 connected to the inflow path 7 to face downward (the same reference number as used with respect to the second flow path is hereinafter used with respect to the discharge path). The inflow path 7 has a tubular shape, and has an open end on the side opposite from the side connected to the foreign matter capturing portion 6. The discharge path 8 also has a tubular shape, and has an open lower end. The inflow path 7 has, in the vicinity of its opening, insertion holes 10 for inserting a pin fastener 9. The discharge path 8 has an internal thread 11 on its inner surface, and a screw-type discharge plug 12 is screwed into the internal thread 11. The discharge plug 12 is provided with an O-ring 13 so that when the discharge plug 12 is screwed into the discharge path 8, liquid tightness is ensured.

The valve element 3 is inserted into the main body 2 through the opening of the inflow path 7 (left side of the inflow path 7 shown in Fig. 1). The valve element 3 has, in its interior, a communication path 14 via which the inflow path 7 and the discharge path 8 communicate with each other in a fluid-flowing state. The communication path 14 has a bottomed recess 15 which has a closed bottom, and which is open in the direction in which the valve element 3 is inserted into the main body 2; and a communication path through-hole 16 formed in the bottomed recess 15 so as to open corresponding to the position of the discharge path 8 in the fluid-flowing state. The communication path through-hole 16 includes a rounded portion 17 at the radially outer peripheral edge thereof. One of the fluid-flowing state and a blocked state between the inflow path 7 and the discharge path 8 is switchable to the other state by rotating the valve element 3 about the center axis. The fluid-flowing state refers to the state in which the circumferential positions of the communication path through-hole 16 and the discharge path 8 coincide with each other. The blocked state refers to the state in which the communication path through-hole 16 is circumferentially displaced from the discharge path 8 (normally located on the side circumferentially opposite from the discharge path 8).

The front end of the valve element 3 (distal end of the bottomed recess 15) is fitted in an annular groove 18 formed in the inner surface of the main body 2 such that the valve element 3 is rotatable about the center axis. The valve element 3 has, in its rear end, a wrench hole 19 for inserting a hex wrench for rotating the valve element 3. Also, an auxiliary seal member 20 is disposed between the inner surface of the main body 2 and the outer surface of the valve element 3. By fitting the pin fastener 9 into the insertion holes 10 with the valve element 3 inserted in the main body 2, the valve element 3 is attached to be axially immovable relative to the main body 2, and to be rotatable about the center axis. The valve structure is designed such that with the annular groove 18 in the inner surface of the main body 2 omitted, the valve element 3 is simply inserted into the main body 2.

The guide member 4 is disposed between the inner surface of the main body 2 and the outer surface of the valve element 3. The guide member 4 has a substantially tubular shape, and has a guide member through-hole 21 formed in the tubular surface so as to correspond to the position of the discharge path 8; and an inclined end 22 formed at one axial end so as to be inclined by about 45 degrees relative to the center axes of the inflow path 7 and the discharge path 8. The valve element 3 is guided by the guide member 4 so as to be rotatable about the center axis. The guide member through-hole 21 has a diameter larger than the diameter of the communication path through-hole 16, and the communication path through-hole 16 is included within the formation range of the guide member through-hole 21. The communicating path through-hole 16 and the guide member through-hole 21 may have the same shape.

The main body 2 has, on its inner surface, a step 23 inclined to axially face the inclined end 22. An annular groove inclined along the inclined end 22 is formed between the step 23 and the inclined end 22. The guide member 4 has a radially outwardly extending protrusion 24 on the outer periphery of the other axial end thereof. Rotation of the guide member 4 about the center axis relative to the main body 2 is prevented to some extent by its abutment with the seal member 5, which is disposed on the step 23 of the main body 2, but by fitting the protrusion 24 into a recess formed in the inner surface of the main body 2, it is possible to increase the rotation preventing effect. Also, by forming the protrusion 24, it is possible to circumferentially position the guide member 4 with ease when assembling the valve structure 1. In some cases, the protrusion 24 may be omitted.

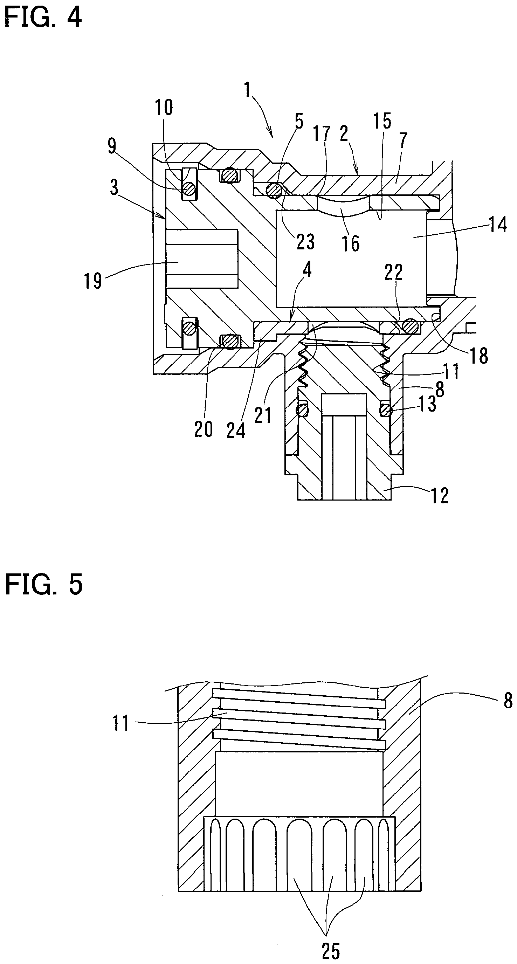

The seal member 5 is an annular O-ring having the same size as the auxiliary seal member 20, which is disposed between the inner surface of the main body 2 and the outer surface of the valve element 3, and the seal member 5 is formed in the above groove such that the center of the seal member 5 passes through the center axis of the discharge path 8. In the blocked state shown in Fig. 4, the inflow path 7 is located on one side of the imaginary surface defined by the seal member 5 (circular flat surface in this embodiment) with the discharge path 8 located on the other side thereof, and the openings of the communication path 14 (the opening of the bottomed recess 15 and the communication path through-hole 16), which can communicate with the inflow path 7 and the discharge path 8, are located only on the one side of the above surface. That is, the inflow path 7 and the discharge path 8 are liquid-tightly separated from each other by the seal member 5.

Also, the fluid can flow from the inflow path 7 toward the discharge path 8 by rotating, with the discharge plug 12 removed from the discharge path 8, the valve element 3 about its center axis by 180 degrees such that the communication path through-hole 16 of the valve element 3 faces downward, and coincides in position with the guide member through-hole 21 of the guide member 4 and the discharge path 8, thereby switching the blocked state to the fluid-flowing state.

As illustrated in Fig. 5, the discharge path 8 has, on the upper side of its inner surface, the internal thread 11, into which the discharge plug 12 is screwed, and also has, on the lower side of its inner surface, a plurality of recesses 25 extending in the direction in which the fluid is discharged. The recesses 25 are formed in the inner surface portion of the discharge path 8 having a diameter larger than the diameter of the inner surface portion of the discharge path 8 with which the O-ring 13 on the discharge plug 12 comes into contact when the discharge plug 12 is screwed into the discharge path 8.

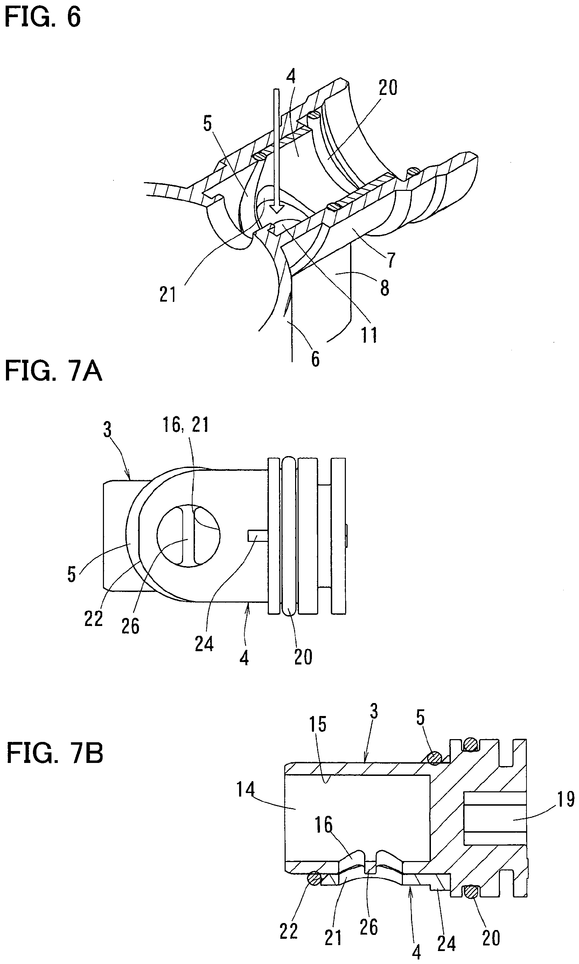

The guide member through-hole 21 is an elongated hole extending in the rotation direction of the valve element 3. A through hole in the discharge path 8 (portion in which the internal thread 11 is formed) is included within the formation range of the guide member through-hole 21. Due to this, as illustrated in Fig. 6, the inner surface of the main body 2 is exposed to the inner edge of the guide member through-hole 21 in the above rotational direction.

In the valve structure 1 of the first embodiment, since, in the blocked state, the fluid in the communication path 14 cannot flow from the one side of the flat surface defined by the seal member 5 to the other side thereof, i.e., from the side of the inflow path 7 to the discharge path 8, leakage of the fluid in the blocked state is prevented.

Also, in the valve structure 1 of the first embodiment, since the seal member 5 is disposed in the groove between the step 23 of the main body 2 and the inclined end 22 of the guide member 4 so that when the valve element 3 rotates about the center axis, the seal member 5 does not rotate, it is possible to prevent the burden on the seal member 5 caused by the seal member 5 crossing the discharge path 8, and thus extend the life of the seal member 5. The seal member 5 abuts against the inclined end 22 by receiving hydraulic pressure from the side of the inflow path 7, thereby making it possible to prevent displacement of this seal member from a predetermined position, and prevent a reduction in liquid tightness due to such displacement. While the inclined end 22 is annularly closed in the first embodiment, a cut may be formed in the upper end of the inclined end 22 such that the seal member 5 and the valve element 3 directly abut against each other at this cut. This structure also produces the same effect.

Also, in the valve structure 1 of the first embodiment, since the rounded portion 17 is formed at the radially outer peripheral edge of the communication path through-hole 16, when the seal member 5 crosses the communication path through-hole 16 due to rotation of the valve element 3 about the center axis, it is possible to decrease the burden on the seal member 5, and thus extend the life of the seal member 5.

Also, in the valve structure 1 of the first embodiment, since the center of the seal member 5 is located on the center axis of the discharge path 8, even if the positions of the communication path through-hole 16 and the guide member through-hole 21 are somewhat displaced from each other, it is possible to ensure a reliable liquid-tight state due to the seal member 5. Also, since the seal member 5 and the auxiliary seal member 20 have the same size, even if the seal members 5 and 20 are mixed up and wrongly attached, no trouble will occur. Also, since it is only required to fit a normal O-ring as the seal member 5 into the elliptical groove, the seal member 5 has the same assemblability, sealability, durability, etc. as an ordinary O-ring. The sizes of the seal member 5 and the auxiliary seal member 20 may be different from each other.

Also, in the valve structure 1 of the first embodiment, since the communication path through-hole 16 is included within the formation range of the guide member through-hole 21, even if the centers of the communication path through-hole 16 and the guide member through-hole 21 are somewhat displaced from each other, the fluid flows smoothly toward the discharge path 8, and it is possible to avoid the trouble caused by adhesion of foreign matter (such as iron dust or rust) in the fluid to the inner edge of the guide member through-hole 21.

Also, in the valve structure 1 of the first embodiment, since the front end of the valve element 3 (distal end of the bottomed recess 15) is fitted in the annular groove 18, which is formed in the inner surface of the main body 2, it is possible to prevent foreign matter in the fluid from entering the gap between the inner surface of the main body 2 and the outer surface of the valve element 3 through the distal end of the bottomed recess 15.

Also, in the valve structure 1 of the first embodiment, since the discharge plug 12, which is provided with the O-ring 13, is screwed into the discharge path 8, when, while detaching the discharge plug 12, the inner surface of the discharge path 8 and the O-ring 13 on the discharge plug 12 are brought out of contact with each other, the external thread is kept caught in the internal thread 11. Therefore, it is possible to avoid the situation in which the discharge plug 12 is suddenly detached from the discharge path 8 and the fluid spouts out.

Also, in the valve structure 1 of the first embodiment, since the discharge path 8 has, on the lower side of its inner surface, a plurality of recesses 25 extending in the direction in which the fluid is discharged, the fluid is rectified downwardly in the discharge path 8, and scattering of the fluid discharged from the discharge path 8 is reduced. Also, since the recesses 25 are formed in the inner surface portion of the discharge path 8 having a diameter larger than the diameter of the inner surface portion of the discharge path 8 with which the O-ring 13 on the discharge plug 12 comes into contact when the discharge plug 12 is screwed into the discharge path 8, the O-ring 13 is less likely to come into contact with the recesses 25 when attaching or detaching the discharge plug 12, so that the O-ring 13 is not scratched. The lengths, the number, the depths, etc. of the recesses 25 can be appropriately determined in view of the inner diameter of the discharge path 8, the flow rate of fluid, the kind of fluid, etc.

Also, in the valve structure 1 of the first embodiment, since, by forming the guide member through-hole 21 as an elongated hole extending in the rotation direction of the valve element 3, the inner surface of the main body 2 is exposed to the inner edge of the guide member through-hole 21 in the rotational direction of the valve element, the fluid jetted at a high speed when the valve opening degree is relatively small (see the downward arrow in Fig. 6) once collides with the inner surface of the main body 2, and its momentum is weakened. Therefore, it is possible to reduce scattering of the fluid discharged from the discharge path 8, to the vicinity of the discharge path 8.

Figs. 7A and 7B illustrate a first variation of the valve element 3 of the valve structure 1 according to the first embodiment. The valve element 3 of the first variation incudes a bridge portion 26 extending in the rotation direction of this valve element 3 so as to straddle the communication path through-hole 16. If the valve element 3 of the first variation is used, when the communication path through-hole 16 crosses the seal member 5, the seal member 5 is supported by the bridge portion 26 and does not fall into the communication path through-hole 16, so that a large load is less likely to be applied to the seal member 5. Therefore, it is possible to extend the life of the seal member 5.

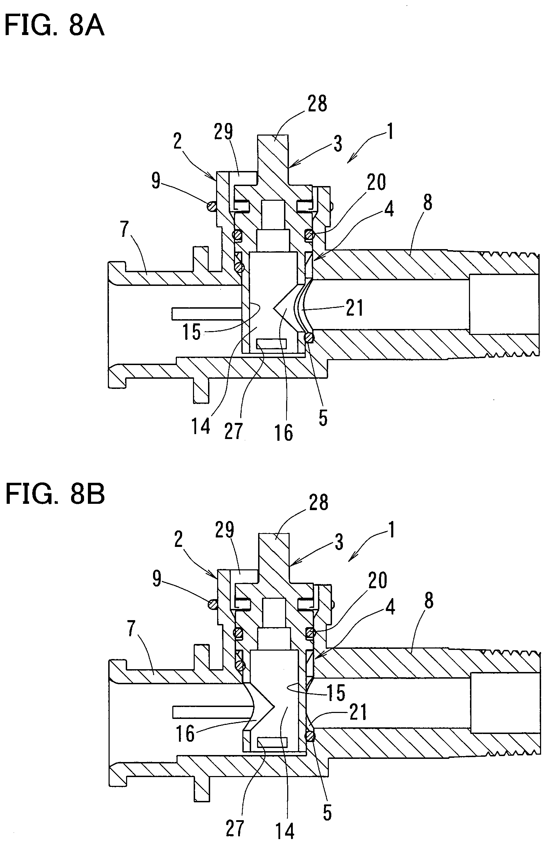

Figs. 8A and 8B illustrate a second variation of the valve element 3 of the valve structure 1 according to the first embodiment. The valve element 3 of the second variation includes a window 27 formed near the opening of the bottomed recess 15, and extending through the inner and outer sides of the bottomed recess 15. This valve element 3 includes, at the rear end thereof, a lever portion 28 for rotating the valve element 3 about the center axis. The main body 2 includes an abutment portion 29 for restricting the rotation angle of the lever portion 28 within a predetermined range (within the range of 180 degrees in the second variation). The center axis of the discharge path 8 coincides with the centers of the communication path through-hole 16 and the guide member through-hole 21 in the fluid-flowing state. The inflow path 7 and the discharge path 8 are coaxially connected together to have the same center axis in the second variation, but may be non-coaxially connected together not to have the same center axis.

In the fluid-flowing state shown in Fig. 8A, the fluid flowing in the inflow passage 7 flows into the communication path 14 through the window 27 of the bottomed recess 15 of the valve element 3 and the gap between the lower end of the valve element 3 and the inner surface of the inflow path 7, and is discharged to the discharge path 8 through the communication path through-hole 16 and the guide member through-hole 21. The valve element 3 of the second variation is designed such that the centers of the communication path through-hole 16 and the guide member through-hole 21 coincide with each other in the fluid-flowing state. Therefore, the fluid can flow smoothly from the inflow path 7 to the discharge path 8.

On the other hand, when the fluid-flowing state is switched to the blocked state shown in Fig. 8B by rotating the lever portion 28 by 180 degrees, the flow path 7 is located on one side of the surface defined by the seal member 5 with the discharge path 8 located on the other side thereof, and the openings (the communication path through-hole 16 and the window 27) of the communication path 14, which can communicate with the inflow path 7 and the discharge path 8, are located only on the one side of the above surface. That is, the inflow path 7 and the discharge path 8 are liquid-tightly separated from each other by the seal member 5. Therefore, the fluid cannot flow from the inflow path 7 to the discharge path 8, and does not leak.

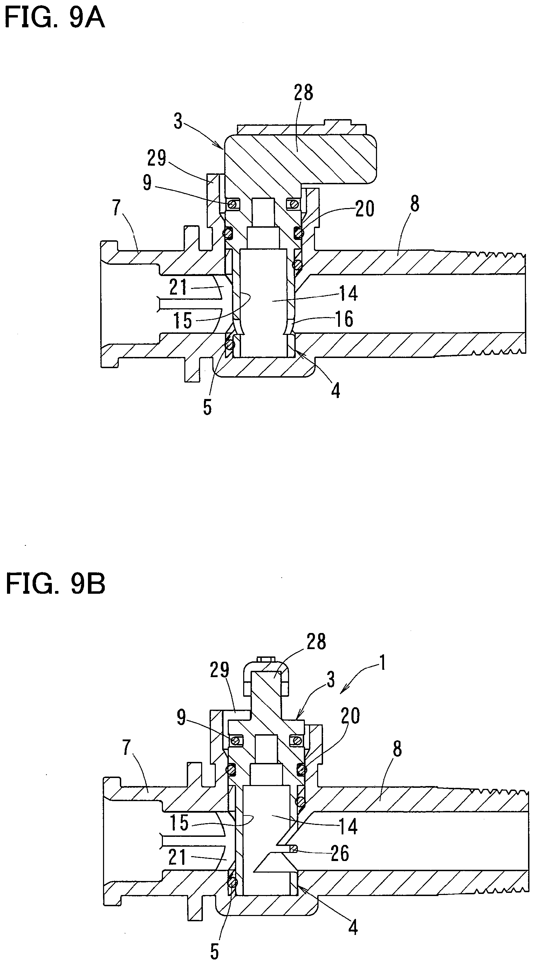

Figs. 9A and 9B illustrate a third variation of the valve element 3 of the valve structure 1 according to the first embodiment. The valve element 3 of the third variation has, in its bottomed recess 15, a (cutout-shaped) communication path through-hole 16 of which the width in the rotational axis direction is small at both circumferential ends of the valve element 3, and is the largest at the circumferential center. A bridge portion 26 is formed at the center of the communication path through-hole 16 in the rotational axis direction. This lever element 3 includes, at the rear end thereof, a lever portion 28 for rotating the valve element 3 about the center axis. The main body 2 includes an abutment portion 29 for restricting the rotation angle of the lever portion 28 within a predetermined range (within the range of 90 degrees in the third variation).

In the fluid-flowing state shown in Fig. 9A, the fluid flowing in the inflow path 7 flows into the communication path 14 through the guide member through-hole 21 and one circumferential end of the communication path through-hole 16, which is formed in the bottomed recess 15 of the valve element 3, and is discharged to the discharge path 8 through the other circumferential end of the communication path through-hole 16.

On the other hand, when the fluid-flowing state is switched to the blocked state shown in Fig. 9B by rotating the lever portion 28 by 90 degrees, the flow path 7 is located on one side of the surface defined by the seal member 5 with the discharge path 8 located on the other side thereof, and the opening (the communication path through-hole 16) of the communication path 14, which can communicate with the inflow path 7 and the discharge path 8, is located only on the other side of the above surface. That is, the inflow path 7 and the discharge path 8 are liquid-tightly separated from each other by the seal member 5. Therefore, the fluid cannot flow from the inflow path 7 to the discharge path 8, and does not leak. Also, since it is possible to switch one of the fluid-flowing state and the blocked state to the other state by rotating the lever portion 28 by a small degree (90 degrees), this valve element 3 can be handled easily.

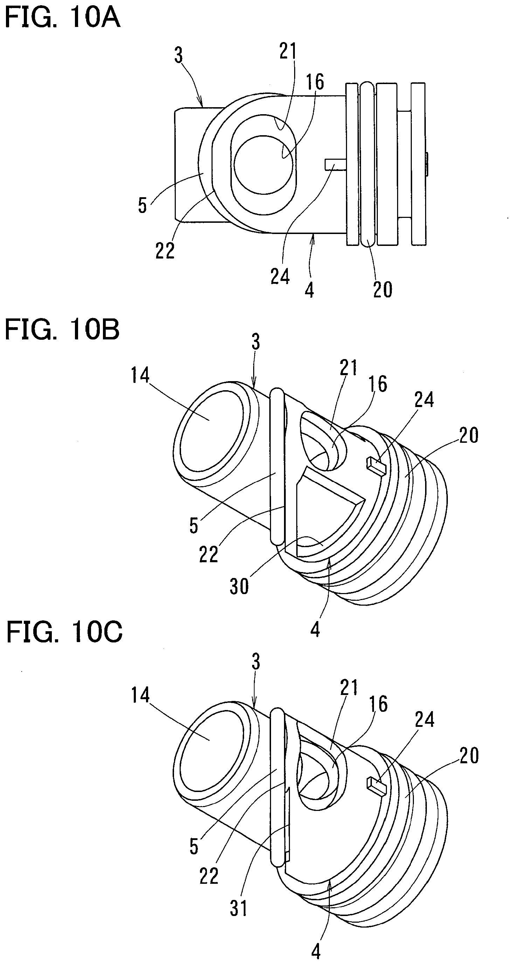

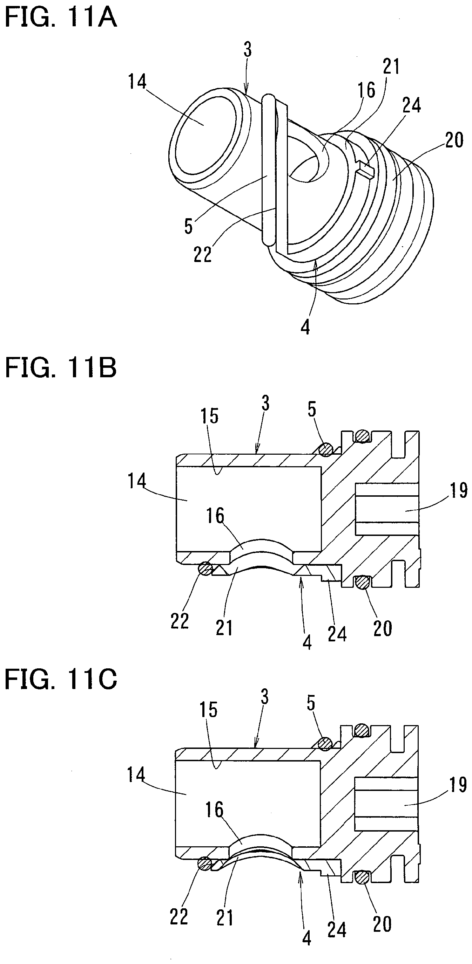

Figs. 10A to 10C and Figs. 11A to 11C illustrate variations of the guide member 4 of the valve structure 1 according to the first embodiment.

For the guide member 4 shown in Fig. 10A, the guide member through-hole 21 is an elongated hole extending in the rotation direction of the valve element 3. The lengths of the long axis and the short axis of this elongated hole are both larger than the diameter of the communication path through-hole 16. Therefore, in the fluid-flowing state of the valve element 3, the communication path through-hole 16 and the inner edge of the guide member through-hole 21 do not overlap with each other, and the communication path through-hole 16 is completely included within the formation range of the guide member through-hole 21.

With this arrangement, when the state of the valve element 3 is switched to the fluid-flowing state, even if the centers of the communication path through-hole 16 and the guide member through-hole 21 are somewhat displaced from each other, the fluid flows smoothly toward the discharge path 8. Therefore, it is possible to avoid the trouble caused by adhesion of foreign matter (such as iron dust or rust) in the fluid to the inner edge of the guide member through-hole 21. Also, since displacement of the centers of the communication path through-hole 16 and the guide member through-hole 21 is allowed to some degree, the valve element 3 can be handled easily.

The guide member 4 shown in Fig. 10B has a through hole 30 circumferentially adjacent to the guide member through-hole 21. Due to such a through hole, even if foreign matter is wedged between the inner periphery of the guide member 4 and the outer periphery of the valve element 3, the foreign matter is discharged from the through hole 30, so that the trouble caused by foreign matter can be avoided.

For the guide member 4 shown in Fig. 10C, a gap 31 is defined at the portion of the inclined end 22 circumferentially adjacent to the guide member through-hole 21 as an elongated hole. Due to such a gap, even if foreign matter is wedged between the inner periphery of the guide member 4 and the outer periphery of the valve element 3, the foreign matter is captured at the gap 31, and is less likely to reach the seal member 5, so that the trouble caused by foreign matter can be avoided.

The guide member 4 shown in Fig. 11A has a guide member through-hole 21 formed as a single through hole by coupling together the entire of the guide member through-hole 21 and the through hole 30 of the guide member 4 shown in Fig. 10B. Due to such a guide member through hole, foreign matter is less likely to be wedged between the inner periphery of the guide member 4 and the outer periphery of the valve element 3, so that the trouble caused by foreign matter can be avoided.

The guide member 4 shown in Fig. 11B has a guide member through-hole 21 tapered to radially expand toward the radially inner side. The guide member 4 shown in Fig. 11C has a guide member through-hole 21 tapered to radially expand toward the radially outer side. By providing such a taper, adhesion of foreign matter to the inner periphery of the guide member through-hole 21 is reduced, and foreign matter is less likely to be wedged.

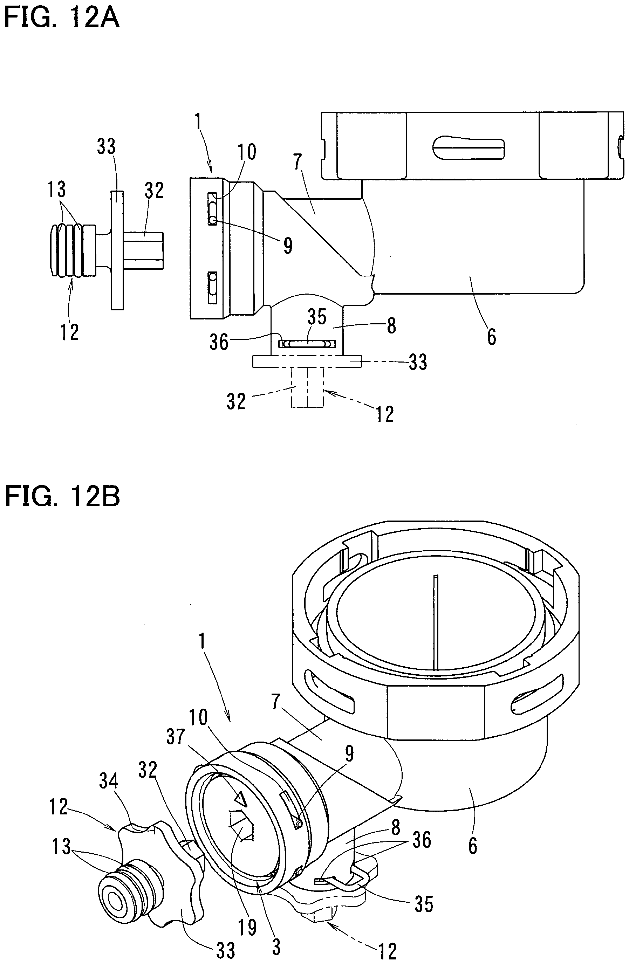

Figs. 12A and 12B illustrate a variation of the discharge plug 12 of the valve structure 1 according to the first embodiment. The discharge plug 12 of this variation includes a hex wrench-shaped tab 32 at the distal end thereof; and a handle portion 33 having a mark 34 at a circumferential portion thereof. The discharge path 8 has, in the vicinity of its opening, insertion holes 36 for inserting a pin fastener 35. By attaching the discharge plug 12 to the discharge path 8, and inserting the pin fastener 35 into the insertion holes 36, the discharge plug 12 is fixed to the discharge path 8. When handling the valve element 3, the discharge plug 12 is pulled out of the discharge path 8, and the hex wrench-shaped tab 32 is inserted into a wrench hole 19 formed in the valve element 3.

A triangular mark 37 indicating the circumferential position of the communication path through-hole 16 is disposed near the wrench hole 19. By making the positions of the triangular mark 37 and the mark 34 of the handle portion 33 coincide with each other, it is possible to clearly learn the rotational position of the valve element 3 (the position of the communication path through-hole 16). By making the shape of the tab 32 of the discharge plug 12 a hex wrench shape, a hex wrench is not separately required when handing the valve element 3, and the work can be conducted smoothly. Also, since the discharge plug 12 is normally attached to the discharge path 8, there is no risk of losing the discharge plug. The mark 37 near the wrench hole 19 and the hex wrench shape of the tab 32 of the discharge plug 12 are also applicable to the valve structure using the screw-type discharge plug 12 (e.g., Fig. 1).

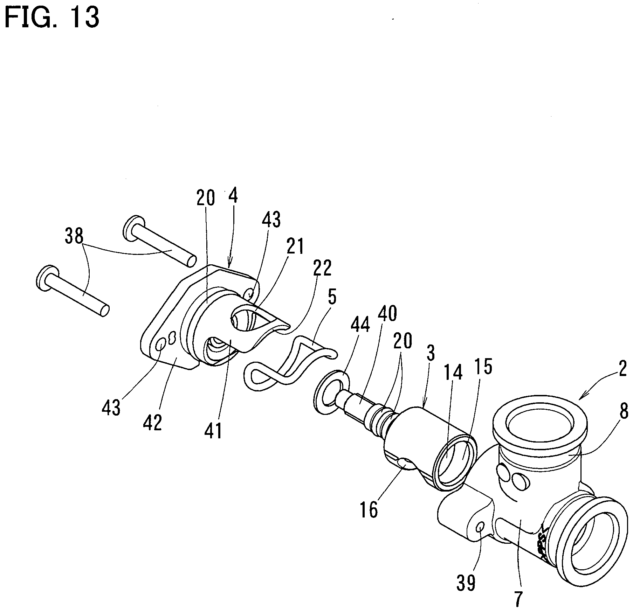

The exploded perspective view of Fig. 13 illustrates a valve structure 1 according to the second embodiment of the present invention when seen from the lower side (from the side of the discharge path 8). The valve structure 1 of the second embodiment includes a main body 2, a valve element 3, a guide member 4, and a seal member 5 as its main elements.

The main body 2 is connected to a foreign matter capturing portion (not shown) of a foreign matter removing device, and includes an inflow path 7 into which a fluid containing foreign matter flows; and a discharge path 8 connected to the inflow path 7. The inflow path 7 has a tubular shape, and has an open end on the side opposite from the side connected to the foreign matter capturing portion. The discharge path 8 also has a tubular shape, and has an open lower end (upper side in Fig. 13). A detachable discharge plug (not shown) is attached to the lower end of the discharge path 8. A pair of screw holes 39 into which respective screws 38 are screwed are formed in the main body 2 such that the inflow path 7 is located between the screw holes 39.

The valve element 3 is inserted into the main body 2 through the opening of the inflow path 7. The valve element 3 has, in its interior, a communication path 14 via which the inflow path 7 and the discharge path 8 communicate with each other in the fluid-flowing state. The communication path 14 has a bottomed recess 15 which has a closed bottom, and which is open in the direction in which the valve element 3 is inserted into the main body 2; and a communication path through-hole 16 formed in the bottomed recess 15 so as to open corresponding to the position of the discharge path 8 in the fluid-flowing state. One of the fluid-flowing state and the blocked state between the inflow path 7 and the discharge path 8 is switchable to the other state by rotating the valve element 3 about the center axis. The valve element 3 includes, at the rear end thereof, a tab 40 for rotating the valve element 3. Also, the valve element 3 is provided with an auxiliary seal member 20 disposed between the inner surface of the guide member 4 and the outer surface of the valve element 3.

The guide member 4 is disposed between the inner surface of the main body 2 and the outer surface of the valve element 3. The guide member 4 includes a tongue piece 41 extending toward the interior of the main body 2; and a radially outwardly extending flange 42. The tongue piece 41 has a guide member through-hole 21 which corresponds to the position of the discharge path 8 in the fluid-flowing state; and an inclined end 22 formed at one axial end thereof so as to be bent relative to the inflow path 7.

The valve element 3 is guided by the tongue piece 41 of the guide member 4 so as to be rotatable about the center axis. The tongue piece 41 is provided with an auxiliary seal member 20 disposed between the outer periphery of the tongue piece 41 and the inner surface of the main body 2. Through holes 43 through which the respective screws 38 are inserted are formed in both ends of the flange 42, and a through hole (not shown) through which the tab 40 of the valve element 3 is inserted is formed in the center thereof. An annular seat member 44 is disposed between the valve element 3 and the guide member 4.

The main body 2 has, on its inner surface, a step (not shown) axially facing the inclined end 22. An annular groove bent along the inclined end 22 is formed between this step and the inclined end 22. The seal member 5 is a deformed O-ring matching the shape of the inclined end 22, and is disposed in the groove.

In the blocked state, the inflow path 7 is located on one side of the surface defined by the seal member 5 (curved surface defined by the edge of the seal member 5 in this embodiment) with the discharge path 8 located on the other side thereof, and the opening (communication path through-hole 16) of the communication path 14, which can communicate with the inflow path 7 and the discharge path 8, is located only on the other side of the above surface. That is, the inflow path 7 and the discharge path 8 are liquid-tightly separated from each other by the seal member 5. The fluid can flow from the inflow path 7 toward the discharge path 8 by rotating the valve element 3 about its center axis by 180 degrees such that the communication path through-hole 16 of the valve element 3 faces downward, and coincides in position with the guide member through-hole 21 of the guide member 4 and the discharge path 8, thereby switching the blocked state to the fluid-flowing state.

For the valve structure 1 of the second embodiment, too, as in the first embodiment, since, in the blocked state, the fluid in the communication path 14 cannot flow from the one side of the curved surface defined by the seal member 5 to the other side thereof, i.e., from the side of the inflow path 7 to the discharge path 8, leakage of the fluid in the blocked state is prevented. Also, since the seal member 5 is disposed in the groove between the step 23 of the main body 2 and the inclined end 22 of the guide member 4 so that when the valve element 3 rotates about the center axis, the seal member 5 does not rotate, it is possible to prevent the burden on the seal member 5 caused by the seal member 5 crossing the discharge path 8, and thus extend the life of the seal member 5.

Also, by using a deformed seal member as the seal member 5, it is possible to increase the openings of the communication path through-hole 16 and the guide member through-hole 21 compared to the valve structure 1 of the first embodiment. Therefore, it is possible to easily increase the flow rate in this valve structure 1.

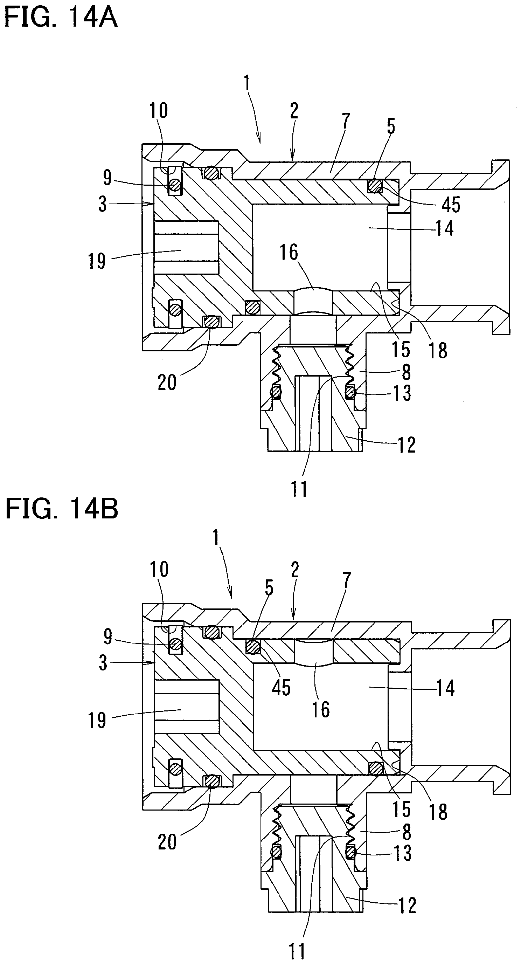

The sectional views of Figs. 14A and 14B illustrate a valve structure 1 according to the third embodiment of the present invention. The valve structure 1 of the third embodiment includes a main body 2, a valve element 3 and a seal member 5 as its main elements.

The main body 2 is connected to a foreign matter capturing portion (not shown) of a foreign matter removing device, and includes an inflow path 7 into which a fluid containing foreign matter flows; and a discharge path 8 connected to the inflow path 7. The inflow path 7 has a tubular shape, and has an open end on the side opposite from the side connected to the foreign matter capturing portion. The discharge path 8 also has a tubular shape, and has an open lower end. The inflow path 7 has, in the vicinity of its opening, insertion holes 10 for inserting a pin fastener 9. A screw-type discharge plug 12 is provided at the lower end of the discharge path 8.

The valve element 3 is inserted into the main body 2 through the opening of the inflow path 7 (left side of the inflow path 7 shown in Fig. 14A). The valve element 3 has, in its interior, a communication path 14 via which the inflow path 7 and the discharge path 8 communicate with each other in the fluid-flowing state. The communication path 14 has a bottomed recess 15 having a bottom and open in the direction in which the valve element 3 is inserted into the main body 2; and a communication path through-hole 16 configured to open from the bottomed recess 15 so as to correspond to the position of the discharge path 8 in the fluid-flowing state. The communication path through-hole 16 has an inner diameter smaller than the inner diameter of the discharge path 8 such that even if the centers of the communication path through-hole 16 and the discharge path 8 are somewhat displaced from each other, the fluid flows smoothly toward the discharge path 8. One of the fluid-flowing state and the blocked state between the inflow path 7 and the discharge path 8 is switchable to the other state by rotating the valve element 3 about the center axis.

The front end of the valve element 3 (distal end of the bottomed recess 15) is fitted in an annular groove 18 formed in the inner surface of the main body 2 such that the valve element 3 is rotatable about the center axis. The valve element 3 has, in its rear end, a wrench hole 19 for inserting a hex wrench for rotating the valve element 3. Also, an auxiliary seal member 20 is disposed between the inner surface of the main body 2 and the outer surface of the valve element 3. By fitting the pin fastener 9 into the insertion holes 10 with the valve element 3 inserted in the main body 2, the valve element 3 is attached to be axially immovable relative to the main body 2 and to be rotatable about the center axis.

The valve element 3 has, in its outer periphery, an inclined peripheral groove 45 inclined by about 45 degrees relative to the center axes of the inflow path 7 and the discharge path 8. The seal member 5 is an O-ring, and disposed in the inclined peripheral groove 45. When, by rotating the valve element 3 about the center axis, the state of the valve element 3 is switched to the fluid-flowing state in which the positions of the communication path through-hole 16 and the discharge path 8 coincide with each other as illustrated in Fig. 14A, the fluid can flow from the inflow path 7 toward the discharge path 8. On the other hand, when the fluid-flowing state is switched to the blocked state in which the communication path through-hole 16 is located on the side opposite from the discharge path 8 as illustrated in Fig. 14B, the inflow path 7 and the discharge path 8 are liquid-tightly separated from each other by the seal member 5 which has rotated about the center axis by 180 degrees together with the valve element 3.

For the valve structure 1 of the third embodiment, too, as in the first and second embodiments, since, in the blocked state, the fluid in the communication path 14 cannot flow from one side of the surface defined by the seal member 5 to the other side thereof, i.e., from the side of the inflow path 7 to the discharge path 8, leakage of the fluid in the blocked state is prevented. By forming a rounded portion at the inner edge of a through hole of the discharge path 8 closer to the valve element 3, it is possible to alleviate the sliding contact between the seal member 5 and the above inner edge when the valve element 3 is rotated about the center axis.

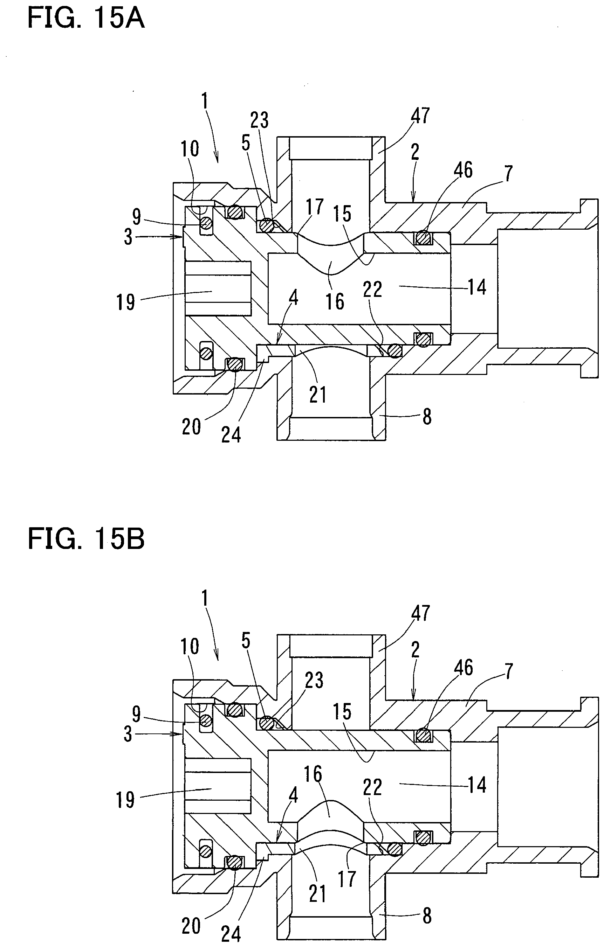

Figs. 15A and 15B illustrate a valve structure 1 according to the fourth embodiment of the present invention. The valve structure 1 of the fourth embodiment is a three-way valve based on the valve structure 1 of the first embodiment shown in Fig. 1. The valve structure 1 (three-way valve) of the fourth embodiment includes a main body 2, a valve element 3, a guide member 4, a seal member 5 and an auxiliary seal member 46 as its main elements.

The main body 2 includes an inflow path as a first flow path 7 into which a fluid flows (the same reference number as used with respect to the first flow path is hereinafter used with respect to the inflow path); a first discharge path as a second flow path 8 connected to the inflow path 7 to face downward (the same reference number as used with respect to the second flow path is hereinafter used with respect to the first discharge path); and a second discharge path as a third flow path 47 connected to the inflow path 7 to face upward, and to be opposed to the first discharge path 8 on the same line (the same reference number as used with respect to the third flow path is hereinafter used with respect to the second discharge path). The inflow path 7 has a tubular shape, and has an open end on the side opposite from the side on which the fluid flows into the inflow path 7. The inflow path 7 has, in the vicinity of its opening, insertion holes 10 for inserting a pin fastener 9. The first and second discharge paths 8 and 47 also have a tubular shape. The first discharge path 8 has an open lower end, and the second discharge path 47 has an open upper end. Pipes (not shown) are connected to the inflow path 7, the first discharge path 8 and the second discharge path 47, respectively.

The valve element 3 is inserted into the main body 2 through the opening of the inflow path 7 (left side of the inflow path 7 shown in Figs. 15A and 15B). The valve element 3 has, in its interior, a communication path 14 via which the inflow path 7 communicates with the first discharge path 8 or the second discharge path 47 in the fluid-flowing state. The communication path 14 has a bottomed recess 15 which has a closed bottom, and which is open to face the inflow path 7; and a communication path through-hole 16 configured to open from the bottomed recess 15 so as to correspond to the position of the first discharge path 8 or the second discharge path 47 in the fluid-flowing state. The communication path through-hole 16 includes a rounded portion 17 at the radially outer peripheral edge thereof.

By rotating the valve element 3 about the center axis, it is possible to switch one to the other of (i) a first fluid-flowing state in which, as illustrated in Fig. 15A, the circumferential positions of the communication path through-hole 16 and the second discharge path 47 coincide with each other such that the inflow path 7 and the second discharge path 47 communicate with each other, and (ii) a second fluid-flowing state in which, as illustrated in Fig. 15B, the circumferential positions of the communication path through-hole 16 and the first discharge path 8 coincide with each other such that the inflow path 7 and the first discharge path 8 communicate with each other. In the first fluid-flowing state, the blocked state is kept between the inflow path 7 and the first discharge path 8. In the second fluid-flowing state, the blocked state is kept between the inflow path 7 and the second discharge path 47.

The auxiliary seal member 46 is attached to the front end of the valve element 3 so as to be located between the inner surface of the main body 2 and the outer surface of the valve element 3. The valve element 3 has, in its rear end, a wrench hole 19 for inserting a hex wrench for rotating the valve element 3. Also, an auxiliary seal member 20 is disposed between the inner surface of the main body 2 and the outer surface of the valve element 3. By fitting the pin fastener 9 into the insertion holes 10 with the valve element 3 inserted in the main body 2, the valve element 3 is attached to be axially immovable relative to the main body 2, and to be rotatable about the center axis.

The guide member 4 is disposed between the inner surface of the main body 2 and the outer surface of the valve element 3. The guide member 4 has a substantially tubular shape, and has a guide member through-hole 21 formed in the tubular surface to correspond to the position of the first discharge path 8; and an inclined end 22 formed at one axial end so as to be inclined by about 45 degrees relative to the center axes of the inflow path 7 and the first and second discharge paths 8 and 47. The valve element 3 is guided by the guide member 4 so as to be rotatable about the center axis.

The main body 2 has, on its inner surface, a step 23 inclined to axially face the inclined end 22. An annular groove inclined along the inclined end 22 is formed between the step 23 and the inclined end 22. The guide member 4 has a radially outwardly extending protrusion 24 on the outer periphery of the other axial end of the tubular surface. By fitting the protrusion 24 into a recess formed in the inner surface of the main body 2, it is possible to prevent the guide member 4 from rotating about the center axis relative to the main body 2.

The seal member 5 is an annular O-ring having the same size as the auxiliary seal member 20, which is disposed between the inner surface of the main body 2 and the outer surface of the valve element 3, and the seal member 5 is formed in the groove such that the center of the seal member 5 passes through the center axes of the first and second discharge paths 8 and 47. In the blocked state of the first discharge path 8 shown in Fig. 15A, the inflow path 7 is located on one side of the surface defined by the seal member 5 (circular flat surface in this embodiment) with the first discharge path 8 located on the other side thereof, and the openings of the communication path 14 (the opening of the bottomed recess 15 and the communication path through-hole 16), which can communicate with the inflow path 7 and the first discharge path 8, are located only on the one side of the above surface. That is, the inflow path 7 and the first discharge path 8 are liquid-tightly separated from each other by the seal member 5.

On the other hand, in the blocked state of the second discharge path 47 shown in Fig. 15B, the opening of the bottomed recess 15 of the communication path 14 is located on the one side of the surface defined by the seal member 5 with the communication path through-hole 16 and the first discharge path 8 located on the other side of this surface, and the sealing member 5 does not contribute to the liquid tightness between the inflow path 7 and the second discharge path 47. However, the inflow path 7 and the second discharge path 47 are liquid-tightly separated from each other by the auxiliary seal member 46, which is attached to the front end of the valve element 3.

For the valve structure 1 (three-way valve) of the fourth embodiment, since, in the blocked state of the first discharge path 8, the fluid in the communication path 14 cannot flow from the one side of the surface defined by the seal member 5 to the other side thereof, i.e., from the side of the inflow path 7 to the first discharge path 8, the fluid does not leak out of the first discharge path 8 in this blocked state. Also, since, in the blocked state of the second discharge path 47, the auxiliary seal member 46 prevents the fluid in the communication path 14 from flowing from the side of the inflow path 7 to the second discharge path 47, the fluid does not leak out of the second discharge path 47 in this blocked state.

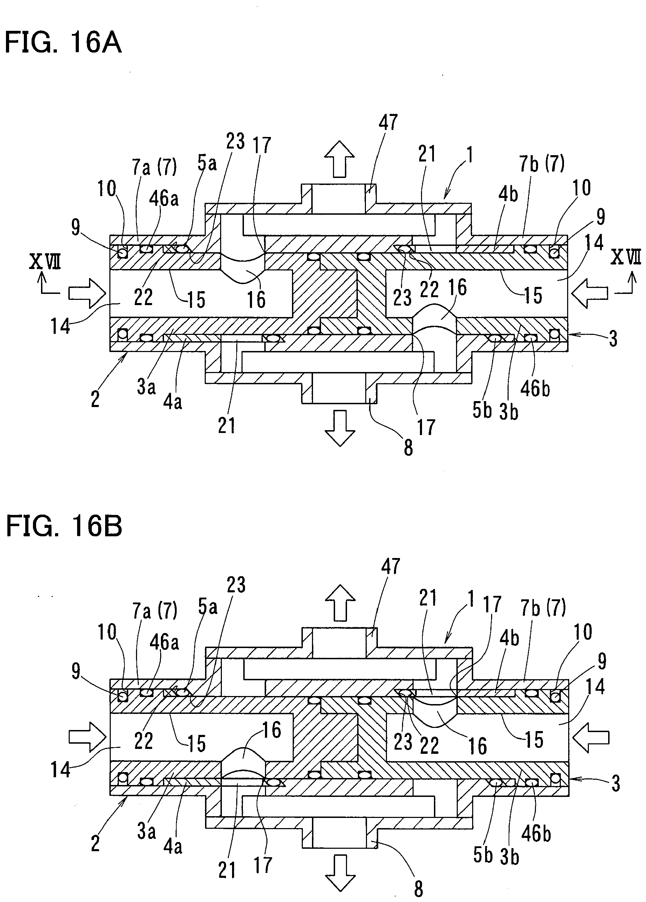

Figs. 16A and 16B illustrate a valve structure 1 according to the fifth embodiment of the present invention. The valve structure 1 of the fifth embodiment is a four-way valve based on the valve structure 1 of the first embodiment shown in Fig. 1. The valve structure 1 (four-way valve) of the fifth embodiment includes, as its main elements, a main body 2, a first valve element 3a, a second valve element 3b, a first guide member 4a, a second guide member 4b, a first seal member 5a, a second seal member 5b, a first auxiliary seal member 46a and a second auxiliary seal member 46b.

The main body 2 has open ends on both sides thereof, and includes an inflow path 7 as a first flow path 7 into which a fluid flows (the portion of the inflow path 7 on the side on which the first valve element 3a is disposed, and the portion of the inflow path 7 on the side on which the second valve element 3b is disposed are hereinafter referred to as the first inflow path portion 7a and the second inflow path portion 7b, respectively); a first discharge path as a second flow path 8 connected to the first and second inflow path portions 7a and 7b to face downward (the same reference number as used with respect to the second flow path is hereinafter used with respect to the first discharge path); and a second discharge path as a third flow path 47 connected to the first and second inflow path portions 7a and 7b to face upward, and to be opposed to the first discharge path 8 on the same line (the same reference number as used with respect to the third flow path is hereinafter used with respect to the second discharge path).

Each of the first and second inflow path portions 7a and 7b has, in the vicinity of its opening, insertion holes 10 for inserting a pin fastener 9. The first and second inflow path portions 7a and 7b are disposed on the same line such that the fluids in the path portions 7a and 7b flow in opposite directions to each other. Through holes leading to the first and second discharge paths 8 and 47 are formed on the tubular surfaces of the first and second inflow path portions 7a and 7b, respectively. Pipes (not shown) are connected to the first inflow path portion 7a, the second inflow path portion 7b, the first discharge path 8 and the second discharge path 47, respectively.

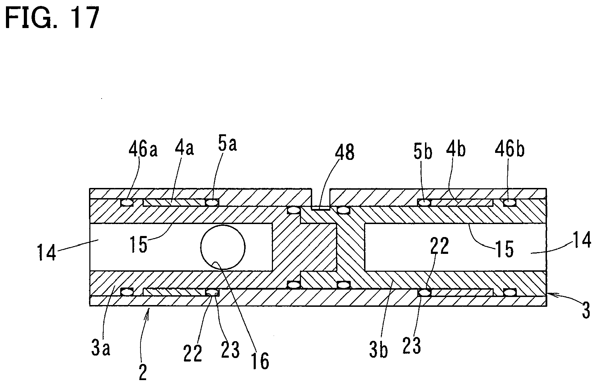

The first valve element 3a is inserted into the main body 2 from the side of the first inflow path portion 7a, and the second valve element 3b is inserted into the main body 2 from the side of the second inflow path portion 7b. The first and second valve elements 3a and 3b are fitted to each other at the axial center of the main body 2 so as to be non-rotatable relative to each other. As illustrated in Fig. 17, the second valve element 3b includes a gear portion 48 on its outer peripheral surface. The main body 2 has a cutout corresponding to the position of the gear portion 48. By engaging a gear (not shown) of a rotary driving source with the gear portion 48 within this cutout, and driving the gear, it is possible to rotate the first and second valve elements 3a and 3b together about the respective center axes. The first and second valved elements 3a and 3b are separate elements in this embodiment, but may comprise a single element.

The first valve elements 3a has, in its interior, a communication path 14 via which the first inflow path portion 7a communicates with the first discharge path 8 or the second discharge path 47 in the fluid-flowing state. The second valve elements 3b has, in its interior, a communication path 14 via which the second inflow path portion 7b communicates with the first discharge path 8 or the second discharge path 47 in the fluid-flowing state. The communication path 14 of each of the first and second valve elements 3a and 3b has a bottomed recess 15 which has a closed bottom and which is open along the inflow path portion 7a, 7b; and a communication path through-hole 16 configured to open from the bottomed recess 15 so as to correspond to the position of the first discharge path 8 or the second discharge path 47 in the fluid-flowing state. The communication path through-hole 16 includes a rounded portion 17 at the radially outer peripheral edge thereof.

Fig. 16A shows a first fluid-flowing state in which the first inflow path portion 7a and the second discharge path 47 are in communication with each other with the circumferential positions of the communication path through-hole 16 of the first valve element 3a and the second discharge path 47 coinciding with each other, and the second inflow path portion 7b and the first discharge path 8 are in communication with each other with the circumferential positions of the communication path through-hole 16 of the second valve element 3b and the first discharge path 8 coinciding with each other. On the other hand, Fig.16B shows a second fluid-flowing state in which the first inflow path portion 7a and the first discharge path 8 are in communication with each other with the circumferential positions of the communication path through-hole 16 of the first valve element 3a and the first discharge path 8 coinciding with each other, and the second inflow path portion 7b and the second discharge path 47 are in communication with each other with the circumferential positions of the communication path through-hole 16 of the second valve element 3b and the second discharge path 47 coinciding with each other. It is possible to switch one to the other of the first and second fluid-flowing states by rotating the first and second valve elements 3a and 3b about the respective center axes.

An auxiliary seal member 20 is disposed at an axial portion of each of the first and second valve elements 3a and 3b so as to be located between the inner surface of the main body 2 and the valve element 3a, 3b. By fitting the pin fastener 9 into the insertion holes 10 with each valve element 3a, 3b inserted in the main body 2, the valve element 3a, 3b is attached to be axially immovable relative to the main body 2, and to be rotatable about the center axis.

The first and second guide members 4a and 4b are each disposed between the inner surface of the main body 2 and the outer surface of the valve element 3a, 3b. The guide members 4a and 4b have a substantially tubular shape. Each of the first and second guide members 4a and 4b has a guide member through-hole 21 formed in its tubular surface to correspond to the position of the first discharge path 8 or the position of the second discharge path 47; and an inclined end 22 formed at one axial end so as to be inclined by about 45 degrees relative to the center axes of the inflow path portion 7a, 7b and the discharge path 8, 47. Each valve element 3a, 3b is guided by the guide member 4a, 4b so as to be rotatable about the center axis. The main body 2 has, on its inner surface, steps 23 inclined to axially face the inclined ends 22 of the respective guide members 4a and 4b. Annular grooves are formed between the steps 23 and the respective inclined ends 22 so as to be inclined along the inclined ends 22.

The first and second seal members 5a and 5b are disposed in the respective grooves. For the side of the first valve element 3a, in the second fluid-flowing state shown in Fig. 16B, the first inflow path portion 7a is located on one side of the surface (circular flat surface in this embodiment) defined by the first seal member 5a with the second discharge path 47 located on the other side thereof, and the inflow path portion 7a and the openings of the communication path 14 (the opening of the bottomed recess 15 and the communication path through-hole 16), which can communicate with the second discharge path 47, are located only on the one side of the above surface. That is, the first inflow path portion 7a and the second discharge path 47 are liquid-tightly separated from each other by the seal member 5.

On the other hand, in the first fluid-flowing state shown in Fig. 16A, the opening of the bottomed recess 15 of the communication path 14 is located on the one side of the surface defined by the first seal member 5a with the communication path through-hole 16 and the second discharge path 47 located on the other side of this surface, and the first sealing member 5a does not contribute to the liquid tightness between the first inflow path portion 7a and the first discharge path 8. However, the first inflow path portion 7a and the first discharge path 8 are liquid-tightly separated from each other by the first auxiliary seal member 46a, which is disposed near the opening of the first valve element 3a.

The liquid-tight action by the second seal member 5b and the second auxiliary seal member 46b on the side of the second valve element 3b is the same as the liquid-tight action by the first seal member 5a and the first auxiliary seal member 46a on the side of the first valve element 3a.

For the valve structure 1 (four-way valve) of the fifth embodiment, since, in the second fluid-flowing state, the fluid in the communication path 14 of the first valve element 3a cannot flow from the one side of the surface defined by the first seal member 5a to the other side thereof, i.e., from the side of the first inflow path portion 7a to the second discharge path 47, and the fluid in the communication path 14 of the second valve element 3b cannot flow from one side of the surface defined by the second seal member 5b to the other side thereof, i.e., from the side of the second inflow path portion 7b to the first discharge path 8, each of the fluids does not leak out of the second discharge path 47 or the first discharge path 8. Also, since, in the first fluid-flowing state, the auxiliary seal member 46a prevents the fluid in the communication path 14 of the first valve element 3a from flowing from the side of the first inflow path portion 7a to the first discharge path 8, and the auxiliary seal member 46b prevents the fluid in the communication path 14 of the second valve element 3b from flowing from the side of the second inflow path portion 7b to the second discharge path 47, each of the fluids does not leak out of the first discharge path 8 or the second discharge path 47.

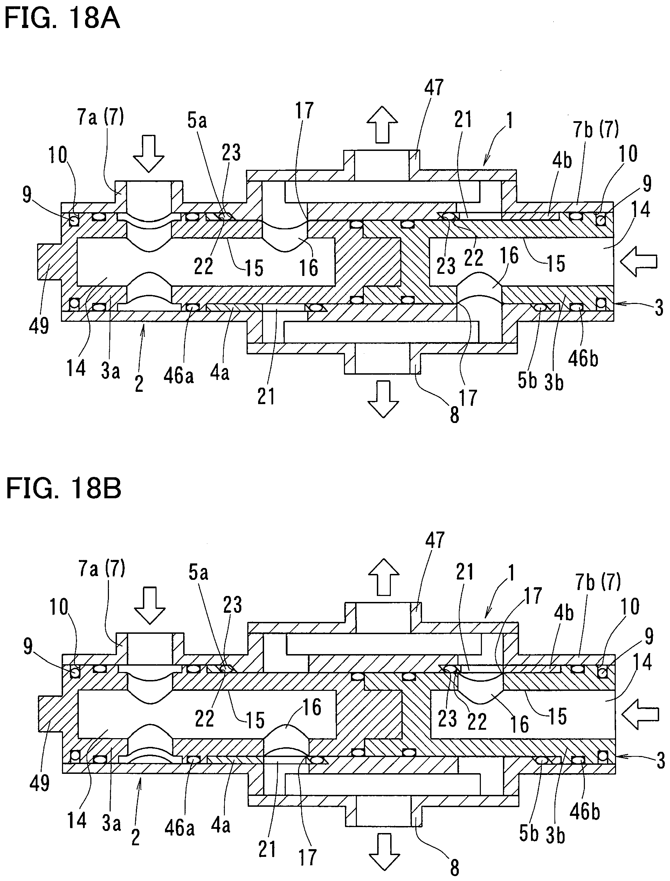

Figs. 18A and 18B illustrate a variation of the valve structure 1 (four-way valve) of Figs. 16A and 16B. The valve structure 1 of this variation has the same basic structure as the valve structure of Figs. 16A and 16B, but is different therefrom in that a first inflow path portion 7a is formed in the peripheral surface of the main body 2; a communication path 14 formed in the first valve element 3a has closed ends on both sides; and, as a substitute for its opening, circumferentially opposed two through holes are formed in the first valve element 3a so as to correspond to the position of the first inflow path portion 7a. The first valve element 3a includes, on its axial end, a protrusion 49 for attaching a jig with which the first and second valve elements 3a and 3b can be rotated.

For this variation, too, as in the valve structure of Figs. 16A and 16B, in the second fluid-flowing state shown in Fig. 18B, the first inflow path portion 7a and the second discharge path 47 are liquid-tightly separated from each other by the first seal member 5a, and the second inflow path portion 7b and the first discharge path 8 are liquid-tightly separated from each other by the second seal member 5b. Also, in the first fluid-flowing state shown in Fig. 18A, the first inflow path portion 7a and the first discharge path 8 are liquid-tightly separated from each other by the first auxiliary seal member 46a, and the second inflow path portion 7b and the second discharge path 47 are liquid-tightly separated from each other by the second auxiliary seal member 46b.

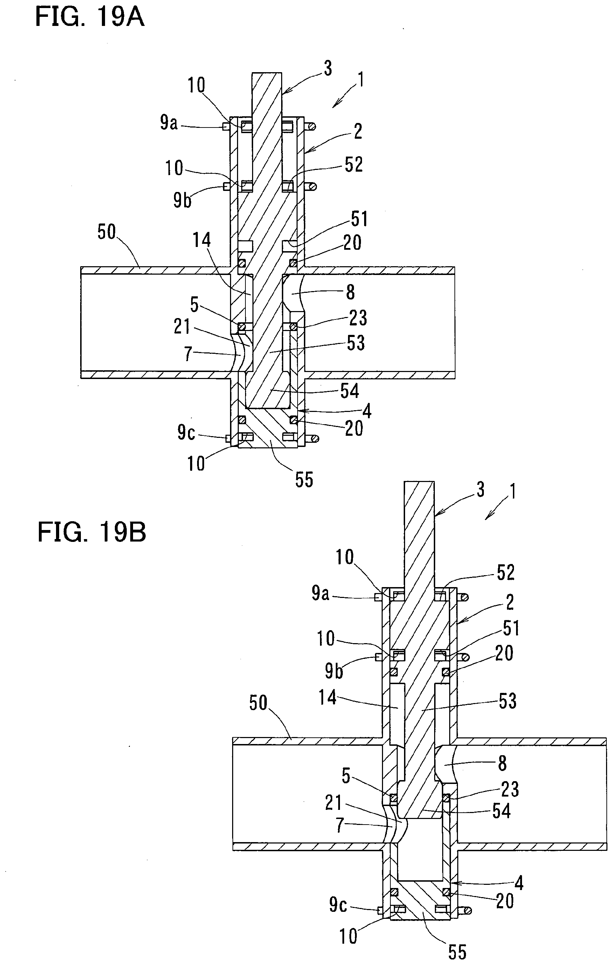

Figs. 19A and 19B illustrate a valve structure 1 according to the sixth embodiment of the present invention. The valve structure 1 of the sixth embodiment includes, as its main elements, a main body 2, a valve element 3, a guide member 4, and a seal member 5. The valve structure 1 of the sixth embodiment is different from the valve structures 1 of the first to fifth embodiments in that, while the valve elements 3 of the first to fifth embodiments rotate about the center axes, the valve element 3 of the sixth embodiment axially moves. This valve structure 1 is disposed at a portion of a pipe 50.

The main body 2 has a tubular shape with both ends thereof (upper and lower ends in Figs. 19A and 19B) open, and includes, in its tubular surface, an inflow path 7 into which a fluid flows from the upstream side of the pipe 50; and a discharge path 8 which is connected to the inflow path 7 and through which the fluid is discharged to the downstream side of the pipe 50. The main body 2 has first insertion holes 10 and second insertion holes 10 formed, respectively, in two portions of its upper end portion, and third insertion holes 10 formed in one portion of its lower end portion such that, from the upper end toward the lower end, a first pin fastener 9a, a second pin fastener 9b and a third pin fastener 9c are inserted in the first insertion holes 10, the second insertion holes 10 and the third insertion holes 10, respectively. A peripheral groove 51 and a step 52 are each formed at a somewhat higher level than the axial center of the main body 2.

The valve element 3 is inserted into the main body 2 through the opening of the main body 2 at one end thereof (upper end in Figs.19A and 19B). The valve element 3 includes a radially compressed portion 53 having a diameter smaller than the inner diameter of the main body 2, and a radially expanded portion 54 having a diameter larger than the diameter of the radially compressed portion 53. A gap is defined between the inner surface of the main body 2 and the outer surface of the radially compressed portion 53. This gap functions as a communication path 14 via which the inflow path 7 and the discharge path 8 communicate with each other in the fluid-flowing state. An auxiliary seal member 20 is disposed between the main body 2 and the valve element 3.

The guide member 4 is inserted into the main body 2 through the opening of the main body 2 at the other end thereof (lower end in Figs. 19A and 19B) so as to be disposed between the inner surface of the main body 2 and the outer surface of the valve element 3. The guide member 4 is a tubular member having a closed bottom, and has a guide member through-hole 21 formed in the tubular surface to correspond to the position of the inflow path 7. The guide member 4 is fixed to the main body 2 by the third pin fastener 9c. The valve element 3 is movable while being guided in the axial direction by the guide member 4. The main body 2 has, on its inner surface, a step 23 axially facing an end of the guide member 4. The seal member 5 is disposed in an annular groove formed along and between the step 23 and the guide member 4. The auxiliary seal member 20 is disposed between the main body 2 and the guide member 4.

As illustrated in Fig. 19A, by pushing in the valve element 3 until the radially expanded portion 54 of the valve element 3 abuts against the bottom 55 of the guide member 4, and inserting the second pin fastener 9b into the second insertion holes 10, the state of the valve element 3 is kept in the fluid-flowing state. In the fluid-flowing state, the fluid flowing from the upstream side of the pipe 50 flows into the communication path 14 through the inflow path 7 and the guide member through-hole 21 of the guide member 4, and flows toward the downstream side of the pipe 50 through the discharge path 8.

On the other hand, as illustrated in Fig. 19B, by (i) pulling out the valve element 3, with the second pin fastener 9b detached temporarily, until the radially expanded portion 54 of the valve element 3 straddles the seal member 5, and (ii) inserting the second pin fastener 9b into the second insertion holes 10 again so as to be fitted in the peripheral groove 51, the state of the valve element 3 is kept in the blocked state. In the blocked state, the inflow path 7 is located on one side of the surface defined by the seal member 5 with the discharge path 8 located on the other side thereof, and the opening of the communication path 14 (gap between the radially compressed portion 53 and the inner surface of the main body 2), which can communicate with the inflow path 7 and the discharge path 8, is located only on the other side of the above surface. That is, the inflow path 7 and the discharge path 8 are liquid-tightly separated from each other by the seal member 5. Therefore, the fluid cannot flow from the inflow path 7 to the discharge path 8, and does not leak.

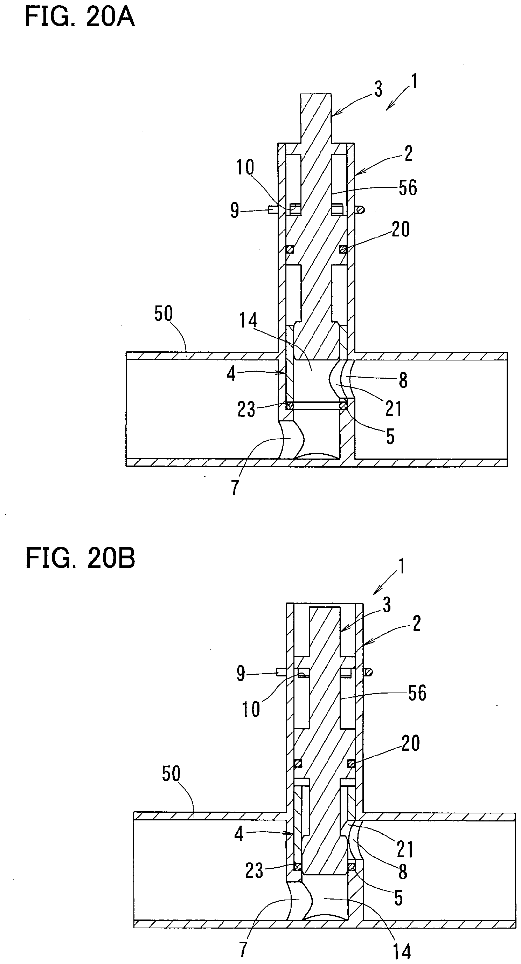

Figs. 20A and 20B illustrate a first variation of the valve structure 1 shown in Figs. 19A and 19B. The valve structure 1 of the first variation has a communication path 14 located under the valve element 3, and has, in the upper end portion of the valve element 3, guide grooves 56 for guiding a pin fastener 9 inserted in insertion holes 10 formed in the main body 2.

As illustrated in Fig. 20A, by pulling out the valve element 3 until the pin fastener 9 abuts against the lower ends of the guide grooves 56, the state of the valve element 3 becomes the fluid-flowing state. In the fluid-flowing state, the fluid flowing from the upstream side of the pipe 50 flows into the communication path 14 through the inflow path 7, and flows toward the downstream side of the pipe 50 through the guide member through-hole 21 and the discharge path 8.

On the other hand, as illustrated in Fig. 20B, by pushing in the valve element 3 until the pin fastener 9 abuts against the upper ends of the guide grooves 56, the state of the valve element 3 becomes the blocked state, in which the valve element 3 straddles the seal member 5. In the blocked state, the inflow path 7 is located on one side of the surface defined by the seal member 5 with the discharge path 8 located on the other side thereof, and the opening of the communication path 14, which can communicate with the inflow path 7 and the discharge path 8, is located only on the one side of the above surface. That is, the inflow path 7 and the discharge path 8 are liquid-tightly separated from each other by the seal member 5. Therefore, the fluid cannot flow from the inflow path 7 to the discharge path 8, and does not leak.

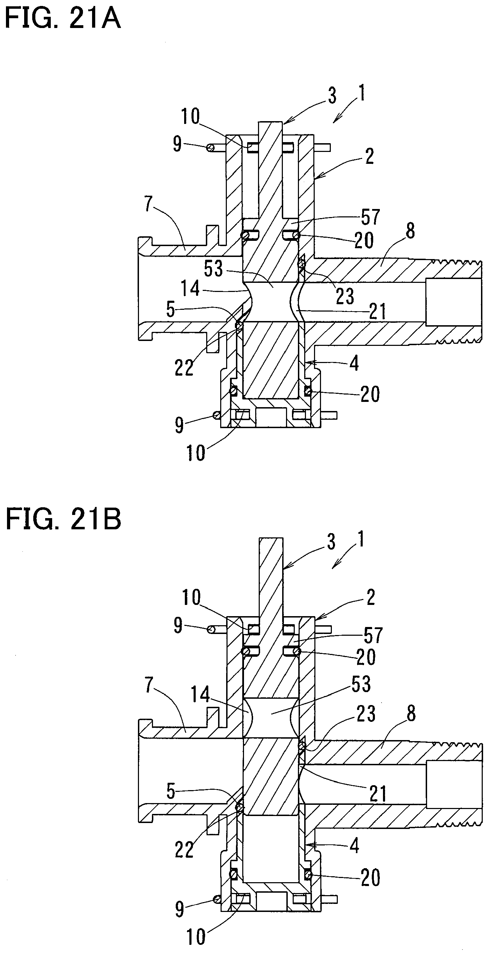

Figs. 21A and 21B illustrate a second variation of the valve structure 1 shown in Figs. 19A and 19B. The valve structure 1 of the second variation includes an arc-shaped radially compressed portion 53 at the middle of the valve element 3 in the length direction, and the outer periphery of the radially compressed portion 53 functions as a communication path 14. A flange 57 is formed near the upper end of the valve element 3.

The guide member 4, which is disposed between the inner surface of the main body 2 and the outer surface of the valve element 3, has an inclined end 22 formed at one axial end thereof so as to be inclined by about 45 degrees relative to the center axes of the inflow path 7 and the discharge path 8. The main body 2 has, on its inner surface, a step 23 inclined to axially face the inclined end 22. An annular groove inclined along the inclined end 22 is formed between the step 23 and the inclined end 22. The seal member 5 is disposed in this groove.

As illustrated in Fig. 21A, by pushing in the valve element 3 until the lower end of the valve element 3 abuts against the guide member 4, the state of the valve element 3 becomes the fluid-flowing state. In the fluid-flowing state, the fluid flowing in the inflow path 7 flows into the communication path 14, and is discharged to the discharge path 8 through the guide member through-hole 21.

On the other hand, as illustrated in Fig. 21B, by pulling out the valve element 3 until the pin fastener 9 abuts against the flange 57, the state of the valve element 3 becomes the blocked state. In the blocked state, the inflow path 7 is located on one side of the surface defined by the seal member 5 with the discharge path 8 located on the other side thereof, and the opening of the communication path 14, which can communicate with the inflow path 7 and the discharge path 8, is located only on the one side of the above surface. That is, the inflow path 7 and the discharge path 8 are liquid-tightly separated from each other by the seal member 5. Therefore, the fluid cannot flow from the inflow path 7 to the discharge path 8, and does not leak.

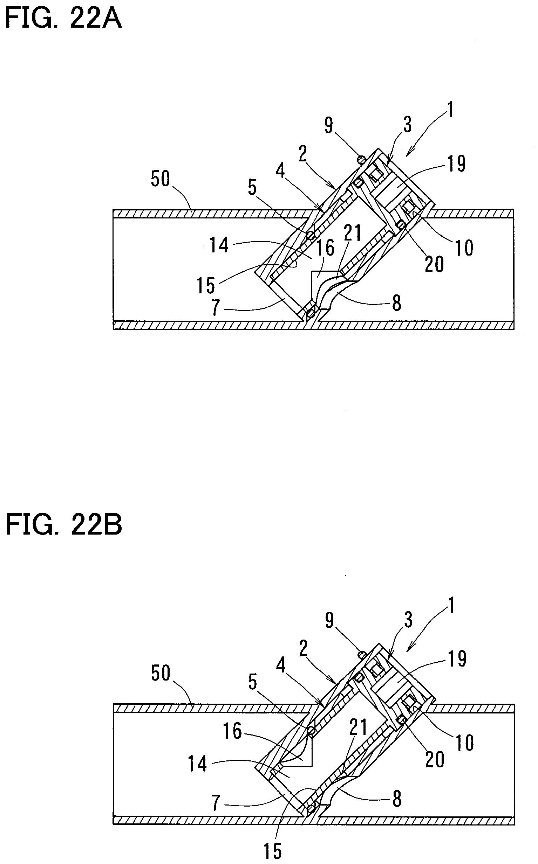

Figs. 22A and 22B illustrate a first application example in which the valve structure 1 of the first embodiment is applied. In the first application example, the valve structure 1 is obliquely attached to a pipe 50. In the fluid-flowing state shown in Fig. 22A, if a fluid flows in the pipe 50 from the left (upstream side) toward the right (downstream side), the fluid flows into the communication path 14 through the end opening of the inflow path 7 of the main body 2 and the opening of the bottomed recess 15 of the valve element 3, and is discharged through the communication path through-hole 16, the guide member through-hole 21 and the discharge path 8. The upstream and downstream sides of the pipe 50 are separated from each other by a partition wall (not shown) at the position of the valve structure 1 such that the entire amount of fluid flowing in the pipe 50 passes through the valve structure 1.

On the other hand, in the blocked state shown in Fig. 22B, the inflow path 7 is located on one side of the surface defined by the seal member 5 with the discharge path 8 located on the other side thereof, and the openings of the communication path 14 (the opening of the bottomed recess 15 and the communication path through-hole 16), which can communicate with the inflow path 7 and the discharge path 8, are located only on the one side of the above surface. That is, the inflow path 7 and the discharge path 8 are liquid-tightly separated from each other by the seal member 5. Therefore, the fluid cannot flow from the inflow path 7 to the discharge path 8, and does not leak.

In the first application example of Figs. 22A and 22B, while the case where a fluid flows in the pipe 50 from the left to the right is described above, the leakage preventing effect of fluid due to the seal member 5 in the blocked state can be similarly obtained in the case where a fluid flows in the pipe 50 from the right to the left, too.

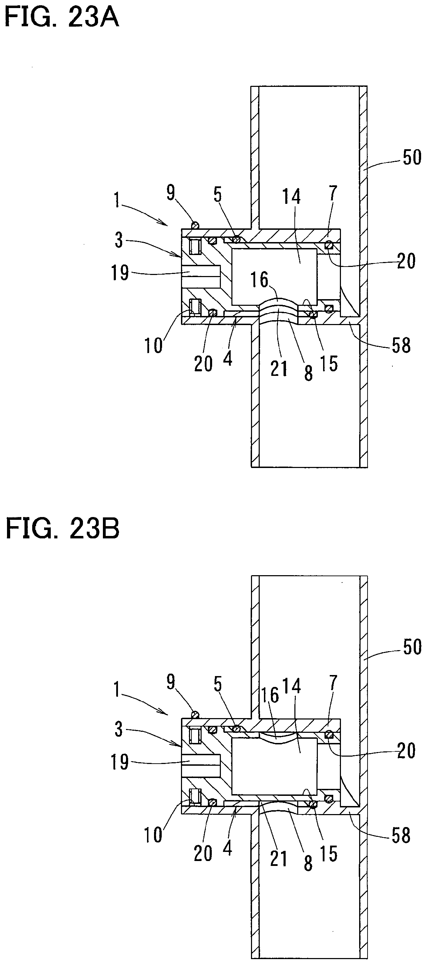

Figs. 23A and 23B illustrate a second application example in which the valve structure 1 of the first embodiment is applied. In the second application example, the valve structure 1 is horizontally attached to a pipe 50 in which a fluid flows from the upper side to the lower side. In the fluid-flowing state shown in Fig. 23A, the fluid flowing downwardly in the pipe 50 flows into the communication path 14 through the open end of the inflow path 7 of the main body 2 and the opening of the bottomed recess 15 of the valve element 3, and flows toward the downstream side of the pipe 50 through the communication path through-hole 16, the guide member through-hole 21 and the discharge path 8. The upstream and downstream sides of the pipe 50 are separated from each other by a partition wall 58 at the position of the valve structure 1 such that the entire amount of fluid flowing in the pipe 50 passes through the valve structure 1.

On the other hand, in the blocked state shown in Fig. 23B, the inflow path 7 is located on one side of the surface defined by the seal member 5 with the discharge path 8 located on the other side thereof, and the openings of the communication path 14 (the opening of the bottomed recess 15 and the communication path through-hole 16), which can communicate with the inflow path 7 and the discharge path 8, are located only on the one side of the above surface. That is, the inflow path 7 and the discharge path 8 are liquid-tightly separated from each other by the seal member 5. Therefore, the fluid cannot flow from the inflow path 7 to the discharge path 8, and does not leak.

The above-described embodiments are mere examples in every respect, and the present invention is not limited thereto. Therefore, the scope of the present invention is indicated not by the above description but by the claims, and should be understood to include all modifications and the meaning equivalent to the scope of the claims.

### DESCRIPTION OF REFERENCE NUMERALS

1: Valve structure
2: Main body
3: Valve element
3a: First valve element
3b: Second valve element
4: Guide member
4a: First guide member
4b: Second guide member
5: Seal member
5a: First seal member
5b: Second seal member
6: Foreign matter capturing portion
7: First flow path (inflow path)
7a: First inflow path portion
7b: Second inflow path portion
8: Second flow path (discharge path, first discharge path)
9: Pin fastener
10: Insertion hole
11: Internal thread
12: Discharge plug
13: O-ring
14: Communication path
15: Bottomed recess
16: Communication path through-hole
17: Rounded portion
18: Annular groove
19: Wrench hole
20: Auxiliary seal member
21: Guide member through-hole
22: Inclined end
23: Step
24: Protrusion
25: Recess
26: Bridge portion
27: Window
28: Lever portion
29: Abutment portion
30: Through hole
31: Gap
32: Tab
33: Handle portion
34: Mark (of the handle portion)
35: Pin fastener
36: Insertion hole
37 (Triangular) mark
38: Screw
39: Screw hole
40: Tab
41: Tongue piece
42: Flange
43: Through hole
44: Seat member
45: Inclined peripheral groove
46: Auxiliary seal member
46a: First auxiliary seal member
46b: Second auxiliary seal member
47: Third flow path (second discharge path)
48: Gear portion
49: Protrusion
50: Pipe
51: Peripheral groove
52: Step
53: Radially compressed portion
54: Radially expanded portion
55: Bottom
56: Guide groove
57: Flange
58: Partition wall

## Claims

1. A valve structure comprising:
a main body (2) including a first flow path (7), and a second flow path (8) connected to the first flow path (7);
a valve element (3) inserted in the main body (2), and configured such that when the valve element (3) rotates about a center axis of the valve element (3) or axially moves, one of a fluid-flowing state and a blocked state between the first flow path (7) and the second flow path (8) is switchable to the other of the fluid-flowing state and the blocked state, the valve element (3) having a communication path (14) via which the first flow path (7) and the second flow path (8) communicate with each other in the fluid-flowing state; and
an annular seal member (5) disposed between the main body (2) and the valve element (3),
wherein in the blocked state, the first flow path (7) is located on one side of an imaginary surface defined by the seal member (5) with the second flow path (8) located on the other side of the imaginary surface, and an opening of the communication path (14), which can communicate with the first flow path (7) and the second flow path (8), is located only on either the one side or the other side of the imaginary surface, and
wherein the first flow path (7) and the second flow path (8) are liquid-tightly separated from each other.

2. The valve structure according to claim 1, further comprising a guide member (4) having:
a guide member through-hole (21) configured to correspond to a position of the first flow path (7) or the second flow path (8) in the fluid-flowing state; and
an inclined end (22) formed at one axial end so as to be inclined relative to center axes of the first flow path (7) and the second flow path (8),
wherein the guide member (4) is disposed between the main body (2) and the valve element (3) so as to be non-rotatable about a center axis of the guide.member (4) relative to the main body (2), and so as to guide the valve element (3),
wherein the main body (2) has a step (23) on an inner surface of the main body (2), and
wherein the seal member (5) is axially disposed along the inclined end (22) so as to be located in a groove formed between the inclined end (22) and the step (23).

3. The valve structure according to claim 2, wherein the communication path (14) has:
a bottomed recess (15) which has a closed bottom, and which is open in a direction in which the valve element (3) is inserted into the main body (2); and
a communication path through-hole (16) configured to open from the bottomed recess (15) so as to correspond to a position of the guide member through-hole (21) in the fluid-flowing state, and
wherein the communication path through-hole (16) is included within a formation range of the guide member through-hole (21).

4. The valve structure according to claim 2 or 3, wherein a through hole is formed in the second flow path (8) so as to be included within a formation range of the guide member through-hole (21) in a rotational direction of the valve element (3), and
wherein the inner surface of the main body (2) is exposed to an inner edge of the guide member through-hole (21) in the rotational direction.

5. The valve structure according to any one of claims 1 to 4, wherein the main body (2) further includes a third flow path (47) connected to the first flow path (7), and
wherein the valve structure further comprises an auxiliary seal member (46) disposed between the main body (2) and the valve element (3) so as to liquid-tightly separate the first flow path (7) and the third flow path (47) from each other.

6. The valve structure according to claim 5, wherein the valve element (3) is constituted by a first valve element (3a) and a second valve element (3b) that are axially non-rotatable relative to each other,
wherein each of the first valve element (3a) and the second valve element (3b) has the communication path (14),
wherein the first flow path (7) comprises a first inflow path portion (7a) connected to the first valve element (3a), and a second inflow path portion (7b) connected to the second valve element (3b),
wherein in a first fluid-flowing state, the first inflow path portion (7a) is in communication with the third flow path (47), and the second inflow path portion (7b) is in communication with the second flow path (8), and
wherein in a second fluid-flowing state created by rotating the valve element (3) about the center axis of the valve element (3) by a predetermined angle, the first inflow path portion (7a) is in communication with the second flow path (8), and the second inflow path portion (7b) is in communication with the third flow path (47).

7. The valve structure according to claim 1, wherein the valve element (3) has, in an outer periphery of the valve element (3), an inclined peripheral groove (45) inclined relative to center axes of the first flow path (7) and the second flow path (8), and the seal member (5) is disposed in the inclined peripheral groove (45).
